# FASCICULE DE BREVET EUROPEEN

(11) **EP 3 139 470 B1**
(45) Date de publication et mention de la délivrance du brevet: **25.07.2018**
(21) Numéro de dépôt: 16182076.6
(22) Date de dépôt: 29.07.2016
(51) Int. Cl.: H02K 1/27

(54) **CORPS DE ROTOR A AIMANTS PERMANENTS ET MACHINE ELECTRIQUE TOURNANTE COMPORTANT UN TEL CORPS**
ROTORKÖRPER MIT DAUERMAGNETEN, UND ELEKTRISCH UMLAUFENDE MASCHINE, DIE EINEN SOLCHEN KÖRPER UMFASST
ROTOR BODY WITH PERMANENT MAGNETS AND ROTATING ELECTRICAL MACHINE COMPRISING SUCH A BODY

(30) Priorité: 03.09.2015 FR 1558146
(43) Date de publication de la demande: 08.03.2017
(73) Titulaire: VALEO EQUIPEMENTS ELECTRIQUES MOTEUR, 94046 Créteil Cedex (FR)
(72) Inventeur: EL BARAKA, Khadija, 77700 SERRIS (FR); JUGOVIC, Svetislav, 91200 ATHIS-MONS (FR)
(74) Mandataire: Duprez, Richard

(56) Documents cités:
- EP-A1- 2 509 197
- EP-A2- 2 141 783
- WO-A2-2013/057673
- US-A1- 2010 001 605

## Description

### Domaine de l'invention

La présente invention concerne un corps de rotor à aimants permanents et une machine électrique tournante, notamment un alternateur et/ou un moteur électrique pour véhicule automobile, comportant un tel corps.

### Etat de la technique

Ainsi qu'on le sait une machine électrique tournante conventionnelle- telle qu'un alternateur, un alternateur réversible appelé alterno-démarreur ou un moteur électrique - comporte deux parties coaxiales à savoir un stator entourant un rotor présentant un corps, tel qu'un paquet de tôles, solidaire d'un arbre de rotor menant et/ou mené.

Le stator comporte un corps, tel qu'un paquet de tôles, portant un bobinage de stator de préférence du type polyphasé. Pour ce faire le corps du stator comporte des encoches, ouvertes ou fermées, traversées par le bobinage du stator s'étendant de part et d'autre du corps du stator pour formation de chignons.

Le bobinage du stator peut comporter plusieurs enroulements, à savoir au moins un enroulement par phase, montés en étoile ou en triangle pour formation d'un bobinage par exemple du type triphasé, pentaphasé ou hexaphasé. Un pont redresseur de courant alternatif en courant continu, par exemple un pont de diodes pour formation d'un alternateur, ou un onduleur, par exemple un pont à transistors du type MSFET pour formation d'un alternateur ou d'un moteur électrique, est associé aux enroulements du bobinage du stator.

Un entrefer est présent entre la périphérie interne du corps du stator et la périphérie externe du paquet de tôles du rotor.

La machine comporte également un carter, classiquement en aluminium, présentant au moins un flasque avant et un flasque arrière. Les flasques sont le plus souvent de forme creuse et présentent chacun un fond prolongé à sa périphérie externe par une jupe périphérique externe. La ou les jupes porte (nt) le corps du stator monté dans la ou les jupes par emmanchement à force, notamment par frettage, ou via des tampons élastiques. Les fonds des flasques présentent chacun centralement un logement pour le montage de la bague externe d'un roulement à billes. La bague interne des roulements à billes est traversée par l'arbre du rotor monté ainsi à rotation dans le carter comme décrit par exemple dans le document WO 02/054566 auquel on se reportera pour plus de précisions. Dans ce document la machine est à ventilation interne en étant implantée au niveau de la face avant du moteur thermique du véhicule automobile. L" arbre de rotor est entraîné par le moteur thermique du véhicule automobile via un dispositif de transmission de mouvement comportant au moins une courroie et une poulie solidaire de l'extrémité avant de l'arbre du rotor. La machine électrique pourra être réversible et constituer un alterno-démarreur fonctionnant en mode alternateur lorsque l'arbre du rotor est menant et en mode moteur électrique pour entraîner en rotation l'arbre de rotor.

Le rotor de ce document comporte un corps de rotor à pôles saillants portant des bobinages et des aimants permanents. L'arbre de rotor porte un collecteur à bagues électriquement conductrices pour alimentation électrique des bobinages. En outre il est prévu des balais pour frotter sur les bagues collectrices afin d'alimenter électriquement celles-ci. Les aimants sont enterrés axialement dans le paquet de tôles du corps du rotor en étant d'orientation axiale par rapport à l'axe de symétrie axiale de l'arbre de rotor.

Plus précisément le corps du rotor présente une partie magnétique en forme de paquet de tôles intercalée entre un premier flasque et un second flasque. La partie magnétique est portée par une âme centrale constituée par la périphérie interne de la partie magnétique trouée centralement pour sa liaison en rotation à l'arbre de rotor moletée pour son emmanchement à force dans l'âme centrale.

Dans une autre solution la machine est implantée au niveau de la face arrière du moteur thermique du véhicule automobile avec la présence d'au moins un embrayage comme décrit par exemple dans les documents FR 2 7782 356, FR 2 830 589 et FR 3 005 900 auxquels on se reportera. Dans ce cas le carter comporte une entretoise périphérique portant le corps du stator. Cette entretoise est implantée entre l'extrémité avant du carter du bloc du moteur thermique du véhicule automobile, constituant le flasque avant, et la cloche de la boîte de vitesse du véhicule automobile, constituant le flasque arrière du carter. L'arbre du rotor est constitué par un prolongement du plateau de réaction de l'embrayage solidaire du vilebrequin menant du moteur thermique du véhicule ou par un arbre mené accouplé par l'intermédiaire d'un embrayage ou d'un amortisseur de torsion de l'arbre mené de la boîte de vitesse.

Ce type de machine donne satisfaction.

Dans le but de réduire les coûts et de simplifier la machine électrique on a proposé dans le document FR 3 008 252 une solution dans laquelle le corps du rotor comporte :
- un premier flasque de support portant un premier épaulement en matière amagnétique,
- un second flasque de pression en matière amagnétique ;
- une partie magnétique intercalée entre le premier flasque et le second flasque ;
- une âme centrale portant la partie magnétique ;
- des logements radiaux ménagés dans la partie magnétique ;
- des aimants permanents montés dans les logements radiaux de la partie magnétique ;
- des moyens élastiques à action axiale portés par le second flasque pour action sur les aimants ;
- des trous alignés réalisés dans le premier épaulement, dans la partie magnétique et dans le second flasque de pression pour passage d'organes de fixation - tels que de rivets, des boulons, des vis ou des goujons- pour serrage de la partie magnétique entre le premier épaulement et le second flasque de pression ;
- des moyens élastiques à action radiale agissant entre l'âme centrale et la périphérie interne des aimants.

Les moyens élastiques à action axiale consistent en des pattes élastiques découpées dans le second flasque pour appui axial sur les aimants. Les moyens élastiques à action radiale sont distincts des moyens élastiques à action radiale. Ainsi les aimants sont ménagés et travaillent dans de bonnes conditions car ils sont retenus axialement et radialement, sachant que les aimants peuvent être endommagés par l'action de la force centrifuge si un mouvement radial se produit et que l'on réduit la performance de la machine si les aimants ne sont pas bien alignés axialement avec la partie magnétique du rotor.

Grâce à ces dispositions on supprime le bobinage usuellement en cuivre du rotor de l'art antérieur, ainsi que les bagues collectrices et les balais ce qui permet de réduire les l'encombrement axial ainsi que le nombre de pièces et la masse de cuivre.
En outre on ne diminue pas les performances de la machine électrique car on augmente le nombre d'aimants permanents du fait que l'on implante ceux-ci dans les logements radiaux de la partie magnétique.

De plus grâce à la présence des moyens élastiques à action axiale on peut augmenter les tolérances de fabrication des aimants, lesdits moyens élastiques rattrapant les jeux axiaux. Les aimants peuvent donc être plus courts que la distance axiale séparant le deuxième flasque du premier épaulement après montage des organes de fixation.
Selon les applications on peut donc, pour un même diamètre intérieur et un même diamètre extérieur de la partie magnétique du rotor, réduire l'encombrement axial du fait que l'on peut implanter un grand nombre d'aimant. La réduction de l'encombrement axial du corps du rotor permet également de réduire la longueur axiale du corps du stator ainsi que la masse du bobinage, usuellement en cuivre, porté par le corps du stator ce qui permet également de réduire les coûts de la machine électrique tournante.
Selon d'autres applications pour un même diamètre extérieur de la partie magnétique du rotor on peut augmenter le diamètre interne du corps du rotor et donc, en se reportant aux documents FR 2 830 589 et FR 3 005 900, augmenter la taille radiale du dispositif de débrayage ainsi que celle du palier, tel qu'un roulement à billes, ce qui permet d'augmenter la durée de vie de la machine électrique tournante.
Il peut être souhaitable de simplifier encore le rotor à aimants permanents et moyens élastiques à action radiale et axiale du document FR 3 008 252 que l'on peut monter dans les documents WO 02/054566, FR 2 7782 356, FR 2 830 589 et FR 3 005 900. Les documents WO 2013/057673, US 2010/001605, EP 2 509 197 et EP 2 141 783 décrivent des rotors à aimant permanent comportant des moyens de fixation pour les aimants.

### Objet de l'invention

La présente invention a pour objet de répondre à ces souhaits.

Selon l'invention le corps du rotor comporte :
- une partie magnétique, telle qu'un paquet de tôles ;
- des logements radiaux ménagés dans la partie magnétique;
- des aimants permanents montés dans les logements radiaux de la partie magnétique et comportant chacun deux faces d'extrémité axiale et deux faces d'extrémité radiale ;
- une âme centrale de support de la partie magnétique ;
- des tenons ménagés dans l'âme centrale à la périphérie interne des logements ;
- des bandes de matière ceinturant les faces d'extrémité axiales et radiales des aimants ;
- chaque bande de matière comportant d'une part une première portion radiale interne dotée d'une mortaise coopérant par coopération de formes avec le tenon associé de l'âme centrale, d'une deuxième part deux deuxièmes portions d'extrémité axiale et d'une troisième part, une troisième portion radiale externe ;
- des moyens élastiques à action radiale appartenant à la première portion des bandes et prenant appui sur l'âme centrale pour solliciter la troisième portion des bandes et les aimants ceinturés par les bandes en direction de la périphérie externe des logements
- et des moyens élastiques à action axiale appartenant aux deux deuxièmes portions axiales des bandes pour action sur les faces d'extrémités axiale des aimants.

La solution selon l'invention est simple et économique car elle fait appel à des bandes de matière ceinturant et retenant les aimants lors du fonctionnement de la machine électrique tournante. Elle permet de créer un corps de rotor manipulable, transportable et imperdable. Plus précisément les bandes de matière sont immobilisées en rotation par coopération de forme avec les tenons ; les dites bandes intégrant les moyens élastiques à action axiale et radiale de sorte que l'on peut supprimer le deuxième flasque de l'art antérieur.
En outre les aimants travaillent dans de bonnes conditions en étant immobilisés radialement et axialement avec force et ce sans contrainte notable sur les aimants. On augmente ainsi la durée de vie de la machine et ce de manière sûre, les effets de la force centrifuge étant réduits par la présence des bandes.
De plus ces bandes de matière protègent et retiennent les aimants de sorte qu'il n'est pas nécessaire de prévoir à la périphérie externe des logements des plaquettes souples de retenue ou autre pour les aimants comme décrit dans le document FR 3 008 252.
Le corps du rotor pourra être solidaire d'un flasque de transmission de mouvement ou d'un arbre de rotor.
Grâce à l'invention on diminue le nombre de pièces. On pourra fabriquer le corps du rotor dans un premier lieu et l'assembler dans un deuxième lieu ou dans le même lieu avec le flasque de transmission de mouvement ou avec un arbre de rotor.

De préférence les bandes de matière pourront être en matière amagnétique. Les bandes de matière pourront être métallique, par exemple en inox, pour diminution de l'encombrement radial et axial.

Suivant l'invention une machine électrique tournante- telle qu'un alternateur, un alterno-démarreur ou un moteur électrique de véhicule automobile- est caractérisée en ce qu'elle comporte un tel corps de rotor.

Suivant d'autres caractéristiques prises isolément ou en combinaison :
- les bandes sont verrouillées à la faveur d'une connexion à moyens d'encliquetage ;
- les moyens d'encliquetage affectent la troisième portion des bandes ;
- la troisième portion des bandes comporte deux parties, l'une des parties comportant un trou tandis que l'autre partie comporte une patte inclinée destinée à pénétrer dans le trou ;
- la partie à trou de la troisième portion des bandes est moins large que celle comprenant la patte inclinée ;
- la partie à trous est moins longue que celle comportant la patte inclinée, les moyens d'encliquetage étant implanté au voisinage de l'une des extrémités de la troisième portion d'une bande ;
- les moyens élastiques à action radiale et axial d'une bande sont formés respectivement à la faveur d'une forme bombée de la première portion de la bande et à la faveur d'une forme bombée d'au moins l'une des deuxièmes portions de la bande ;
- les moyens élastiques à action axiale sont formés à la faveur d'une forme bombée de chacune des deuxièmes portions de la bande;
- la mortaise d'une bande affecte la forme bombée de la première portion de la bande de sorte que la première portion de la bande est fendue;
- la taille de la mortaise est fonction de la taille du tenon associé de l'âme centrale ;
- les formes bombées des moyens élastiques à action axiale et radiale prennent appui localement via leur sommet sur les faces en vis-à-vis d'un aimant ceinturé par la bande ;
- les moyens élastiques à action axiale sont formés à la faveur de languettes inclinées issues d'au moins l'une des deuxièmes portions d'une bande ;
- les languettes sont obtenues par découpe et pliage à partir des deuxièmes portions de la bande ;
- l'extrémité libre des languettes inclinées présente une forme bombée pour contact locale avec la face en vis-à-vis de l'aimant ;
- l'âme centrale appartient à la partie magnétique en constituant la périphérie interne de celle-ci;
- la partie magnétique est de forme annulaire et consiste en un paquet de tôles ;
- l'âme centrale appartient à un moyeu en matière amagnétique ;
- une extrémité de l'âme centrale est solidaire d'un flasque de transmission de mouvement ;
- la partie magnétique comporte une pluralité de segments en forme de bras ;
- les bras en matière magnétique sont globalement d'orientation radiale et séparés les uns des autres par des fentes ;
- les aimants permanents sont montés dans les fentes séparant deux à deux les bras et délimitant avec le moyeu des logements radiaux de montage des bandes et des aimants ;
- le flasque de transmission de mouvement est un seul tenant avec le moyeu constituant l'âme centrale ;
- le moyeu est rapporté sur le flasque de transmission de mouvement;
- le moyeu est rapporté par soudage, notamment du type laser, sur le flasque de transmission de mouvement ;
- le moyeu est rapporté par sertissage sur le flasque de transmission de mouvement ;
- le flasque de transmission de mouvement comporte à sa périphérie externe une collerette configurée pour être fixée à l'un des composants d'un embrayage ;
- la collerette est décalée axialement en direction opposée par rapport aux bras de la partie magnétique ;
- le flasque de transmission de mouvement est prolongé vers l'intérieur par un rebord de liaison en rotation à un arbre de rotor intermédiaire ;
- le rebord de fixation est troué pour sa fixation à l'aide d'organes de fixation, tels que des rivets, sur une collerette que présente l'arbre de rotor intermédiaire ;
- le rebord de fixation présente intérieurement des dents pour sa liaison à cannelures avec l'arbre de rotor intermédiaire ;
- l'âme centrale est configurée pour être liée en rotation à l'arbre de rotor, tel qu'un arbre menant ou mené par exemple l'arbre d'entrée de la boîte de vitesse du véhicule automobile ;
- les bras consistent en un empilement de bras élémentaires en tôle ;
- chaque bras présente à sa périphérie externe des rebords circonférentiels, tels que des lèvres, s'étendant de part et d'autre du bras ;
- une liaison mécanique intervient entre la périphérie interne des bras et le moyeu ;
- la liaison mécanique consiste en un serrage de la périphérie interne des bras sur la périphérie externe du moyeu :
- la liaison mécanique consiste en un emmanchement à force des bras sur le moyeu :
- la liaison mécanique est une liaison à coopérations de formes ;
- la liaison mécaniques est une liaison à cannelures ;
- la liaison mécanique est une liaison du type tenon mortaise ;
- la liaison mécanique est une liaison à que d'aronde ;
- les fentes, présentes entre deux bras adjacents, comportent en dessous des rebords circonférentiels, des faces parallèles pour formation avec la périphérie externe du moyeu de logements radiaux de montage des aimants ;
- les aimants ont une section globalement rectangulaire ;
- les aimants sont en ferrite ;
- les aimants sont en terre rare, tels que des aimants en Néodyme-fer-Bore (NdfeB) ou des aimants à base de Samarium Cobalt (SmCo) ;
- les aimants en ferrite appartiennent à des ensembles magnétiques comportant également au moins une partie amagnétique et /ou au moins un autre aimant ;
- le moyeu est en inox ;
- les bandes de matière sont en inox ;
- le flasque de transmission de mouvement et le moyeu sont en aluminium ou en un alliage d'aluminium ;
- le flasque de transmission de mouvement et le moyeu sont en fonte.

On appréciera que les moyens élastiques à action radiale facilitent le montage des aimants ceinturés par les bandes, les moyens élastiques à action radiale étant déformés lors du montage des aimants dans les logements.

On appréciera que les moyens élastiques à action radiale et axiale facilitent l'encliquetage des moyens des moyens d'encliquetage intervenant au niveau de la troisième portion des bandes, du fait que l'on peut déformer lesdits moyens élastiques.

D'autres avantages apparaîtront à la lecture de la description qui va suivre de manière non limitative et ce en regard des dessins annexés

### Brève description des dessins

- la figure 1 est une vue en perspective partielle d'un corps de rotor de machine électrique tournante montrant pour plus de clarté qu'un seul aimants permanent ceinturé par une bande à moyens élastiques à action radiale et axiale pour un premier mode de réalisation selon l'invention;
- la figure 2 est une vue en perspective de la bande de la figure 1 ;
- la figure 3 est une vue en perspective de l'aimant permanent de la figure 1 destiné à être ceinturé par la bande de la figure 2 pour sa retenue ;
- la figure 4 est une vue en coupe axiale de l'aimant permanent monté dans sa bande de ceinture elle-même montée par coopération de formes dans l'âme centrale de la figure 1 ;
- la figure 5 est une vue partielle de dessus de la troisième portion de la bande de retenue elle-même implantée à la périphérie externe fendue de la partie magnétique de la figure 1.

Dans les figures les éléments identiques ou similaires seront affectés des mêmes signes de référence.

### Descriptions d'exemples de réalisation de l'invention

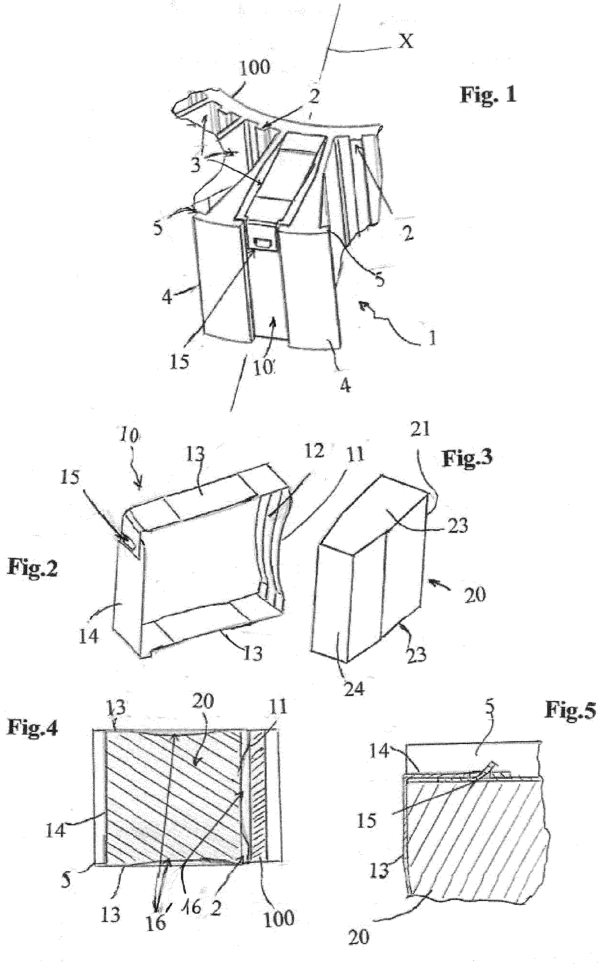

Dans les figures représentées le corps de rotor 1 d'une machine électrique tournante est, pour réductions des coûts et de l'encombrement axial, dépourvu de bobinage et donc de bagues collectrices et de balais ce qui permet également de réduire le nombre de pièces et de simplifier le corps du rotor. Ce corps comporte des aimants permanents 20 montés dans des logements radiaux 3 que présente le corps 1. Par simplicité et pour plus de clarté, on n'a représenté que l'un des aimants monté dans l'un des logements 3, décrits ci-après. Bien entendu une pluralité d'aimants est montée dans les logements 3. De préférence tous les logements radiaux 3 sont occupés par un aimant permanent pour avoir une machine électrique de grande puissance. En variante certains logements 3 peuvent être vides.
Le corps 1 est de forme annulaire. Pour mémoire on rappellera qu'un entrefer existe entre la périphérie externe du corps 1 et la périphérie interne du corps du stator visible dans les documents précités. Le corps 1 présente centralement un axe de symétrie axiale X (Figure 1). Les directions circonférentielle, radiale, transversale et axiale seront faites par rapport à cet axe X, qui constitue l'axe de rotation de l'arbre de rotor non représenté. Ce corps 1 comporte une partie magnétique 4 et une âme centrale 100 de support de la partie magnétique 4.
Par matière magnétique on entend une matière apte à transmettre un flux magnétique, telle que de la matière ferromagnétique par exemple un paquet de tôles. Une matière amagnétique, telle que de l'inox, l'aluminium, de la matière plastique ou du laiton, par opposition à un matériau magnétique, est un mauvais conducteur de flux magnétique. Cette matière amagnétique pourra même empêcher toute transmission du flux magnétique. Elle réduit, voir élimine, les fuites magnétiques.

La partie magnétique 4 comporte des logements radiaux 3 pour des aimants permanents notamment 20 en ferrite ou en terre rare, tels que des aimants en Néodyme-fer-Bore (NdfeB) ou des aimants à base de Samarium Cobalt (SmCo).
La partie magnétique 4 pourra être de forme annulaire et consister en un paquet de tôles comme visible à la figure 1.
L'âme 100 pourra appartenir à la partie magnétique en constituant la périphérie interne continue de celle-ci comme visible à la figure 1.
En variante l'âme pourra être constituée par un moyeu ou un arbre de rotor de préférence en matière amagnétique ou faiblement magnétique, portant la partie magnétique. Cette âme pourra être de forme annulaire.
Le corps 1 du rotor pourra être solidaire d'un flasque d'extrémité de transmission de mouvement, qui pourra être configuré pour être lié en rotation à un arbre de rotor comme décrit par exemple dans le document FR 2 830 589 auquel on se reportera pour plus de précisions. Ce document décrit une machine électrique tournante implantée entre le vilebrequin du moteur thermique du véhicule automobile et l'arbre d'entrée la boîte de vitesse de celui-ci. Le rotor de cette machine électrique est solidaire en rotation d'un arbre de rotor constituant un arbre intermédiaire portant à l'avant un disque de friction appartenant à un premier embrayage, dont le plateau de réaction est solidaire du vilebrequin du moteur thermique du véhicule automobile. A l'arrière cet arbre est configuré pour être lié en rotation au plateau de réaction d'un second embrayage, dont le disque de friction est solidaire en rotation de l'arbre d'entré de la boîte de vitesse. Un palier est intercalé radialement entre la périphérie externe de l'extrémité arrière de l'arbre intermédiaire et la périphérie interne d'un voile intercalé entre le premier embrayage et le rotor de la machine électrique. Pour ce faire le voile appartient à une entretoise intercalée, de manière précitée, entre le carter du bloc moteur thermique du véhicule automobile et la cloche de la boîte de vitesse. Cette entretoise porte en partie le stator de la machine électrique. Le voile présente à sa périphérie interne une portion interne annulaire inclinée portant à son extrémité libre une portée pour le palier, tel qu'un roulement. L'arbre intermédiaire traverse le dispositif de débrayage du premier embrayage. Ce dispositif est dans un mode de réalisation une butée autocentreuse à commande hydraulique. En variante le dispositif de débrayage est une butée autocentreuse à commande par câble. La butée est logée à l'intérieur de la portion interne du voile.
Le rotor comporte un paquet de tôles porté par un moyeu solidaire d'un flasque constituant le plateau de réaction du deuxième embrayage.
Ce flasque de transmission de mouvement, à la lumière de ce document, pourra comporter un rebord interne pour sa liaison en rotation à une collerette que présente l'arbre de rotor intermédiaire.
En variante, comme décrit dans le document FR 3005 900 précité auquel on se reportera le flasque de transmission de mouvement est solidaire d'un disque de friction.
Par simplicité on n'a pas représenté ici le flasque visible dans ces deux documents FR 3 005 900 et FR 2 830 589 ainsi que dans le document FR 3 008 252. L'âme centrale est solidaire de ce flasque. Dans un autre mode de réalisation le corps du rotor pourra être lié en rotation à l'arbre de rotor via son âme centrale appartenant à la partie magnétique comme décrit dans le document WO 02/ 054566 précité.
En variante le corps du rotor pourra être lié en rotation à l'arbre de rotor via son moyeu constituant l'âme centrale du corps du rotor.
Pour ce faire dans les deux cas l'arbre de rotor pourra être moleté pour son emmanchement à force dans l'alésage central de l'âme. L'arbre de rotor pourra être en matière amagnétique ou faiblement magnétique.
Pour rattraper les tolérances axiales de fabrication des aimants et ménager ceux-ci, on fait appel à des moyens élastiques à action axiale portés par une bande de matière 10 associée à chaque aimants 20 et ceinturant l'aimant associé. Les bandes 10 et leurs aimants 20 sont montées dans les logements 3. Chaque bande 10 constitue une bande de retenue de l'aimant 20, de manière décrite ci-après, et est configurée pour constituer des moyens élastiques à action radiale protégeant les aimants soumis à l'action de la force centrifuge de sorte qu'aucun élément de retenu, tel que des plaquettes ou autre n'est à prévoir. Les bandes 10 s'opposent aux mouvements axial et radial des aimants
Des moyens de blocage en rotation interviennent entre l'âme 4 et les bandes 10. La bande de matière 10 pourra être en matériau amagnétique Elle pourra être métallique pour réduction de son encombrement axial et radial. Cette bande 10 pourra être en inox.

Plus précisément le corps du rotor 1 comporte :
- une partie magnétique 4, telle qu'un paquet de tôles ;
- des logements radiaux 3 ménagés dans la partie magnétique 4;
- des aimants permanents 20 montés dans les logements radiaux 3 et comportant chacun deux faces d'extrémité axiale 23 et deux faces d'extrémité radiale 21,24;
- une âme centrale 100 de support de la partie magnétique ;
- des tenons 2 ménagés dans l'âme 100 à la périphérie interne des logements 3 ;
- des bandes de matière 10 ceinturant les faces d'extrémité axiales 13 et radiales 21, 24 des aimants 20 ;
- chaque bande 10 comportant, d'une part une première portion radiale interne 11 dotée d'une mortaise 12 coopérant par coopération de formes avec le tenon 2 associé de l'âme 100, d'une deuxième part, deux deuxièmes portions d'extrémité axiale 13 et d'une troisième part, une troisième portion radiale externe 14 ;
- des moyens élastiques à action radiale 16 appartenant à la première portion 11 des bandes et prenant appui sur l'âme centrale 100 pour solliciter la troisième portion 14 des bandes et les aimants 20 ceinturés par les bandes 10 en direction de la périphérie externe des logements 3.
- et des moyens élastiques à action axiale 16' appartenant aux deux deuxièmes portions 13 des bandes pour action sur les faces d'extrémités axiale 23 des aimants ;

Plus précisément, comme visible dans les figures les moyens élastiques à action radiale 16 appartiennent à la première portion 11 d'une bande 10 et prennent appui sur l'âme centrale 100 et sur la face radiale interne 21 de l'aimant associé 20 pour solliciter la troisième portion 14 de la bande 10 et la face radiale externe 24 de l'aimant associé 20 en direction de la périphérie externe du logement 3 concerné. Les tenons 2 et les mortaises 12 constituent de manière simple et économique des moyens de blocage en rotation. Les tenons 2 sont implantés dans les figures centralement à la périphérie interne des logements 3. Les aimants 20 présentent en outre deux faces latérales en regard de deux bras consécutifs 4 que présente la partie magnétique 4 de manière décrite ci-dessous.
Les moyens élastiques à action axiale 16' et radiale 16 exercent une force de maintien sur les aimants lorsque la machine électrique tourne et ce sans exercer de contrainte notable sur les aimants. La largeur et l'épaisseur des bandes des bandes sont sélectionnées pour exercer sur les faces de l'aimant la force de maintien nécessaire dans toutes les circonstances durant la rotation de la machine. La largeur des bandes est inférieure ou égale au jeu de montage près à celle des logements 3. Il en est de même de la hauteur des bandes qui est inférieure ou égale au jeu de montage près à celle des logements, cette hauteur correspondant à celle des première 11 et troisième 14 portions des bandes. La longueur des bandes, correspondante à celles des deuxièmes portions 13, est fonction de la longueur des logements.

### Premier mode de réalisation

La partie magnétique 4 du corps 1 comporte une pluralité de bras radiaux 4 élémentaires en matière magnétique solidaires de l'âme centrale 100, qui comporte elle-même une pluralité d'âme élémentaires 100 dotées chacune de tenons 2. L'âme 100 pourra être cylindrique et être assemblée, de manière précitée, avec un arbre de rotor amagnétique, par exemple moleté pour son montage à force dans l'alésage interne cylindrique de l'âme 100. Les bras 4 sont répartis circonférentiellement de manière régulière en étant séparés les uns des autres par des fentes. Ils appartiennent chacun à une pluralité de rondelles comprenant chacune une âme centrale élémentaire à tenons 2 et des bras élémentaires 4 en tôle Ces rondelles en tôle sont empilées les uns sur les autres pour formation du corps 1 et réduction des courants de Foucault. Ces tôles sont en matière ferromagnétique avec éventuellement un revêtement. Les tôles ont une faible épaisseur par exemple de 0,3 à 0,35 mm
La périphérie externe des bras 4 délimite l'entrefer avec la périphérie interne du corps du stator de la machine électrique tournante.
Les bras 4, en forme de secteur annulaire, sont dotés chacun à leur périphérie externe de prolongements circonférentiels 5 s'étendant de part et d'autre de chaque bras 4. Les prolongements 5 limitent les fuites magnétiques entre deux bras adjacents, un jeu existant entre les prolongements 5, dirigés l'un vers l'autre, de deux bras adjacents. Le corps 1 du rotor est donc ouvert à sa périphérie externe et les fentes entre deux bras adjacents ont une largeur réduite à la périphérie externe des bras au niveau des prolongements 5. Ces prolongements sont ici en forme de lèvres 5 et délimitent la périphérie externe des logements 3. De même l'âme centrale délimite la périphérie interne des logements radiaux 3 de sorte que ceux-ci sont des logements borgnes. Les tenons 2 s'étendent en saillie radiale à la périphérie externe de l'âme 100 et ce centralement par rapport à la périphérie interne des logements 3 constituant le fond des logements 3.
Radialement en dessous des lèvres 5, les faces latérales (non référencées) en vis-à-vis de deux bras radiaux 4 sont dans ces modes de réalisations parallèles puis convergentes en direction de la périphérie interne des logements 3 délimitée par l'âme centrale 100 (Voir figures 1). Les logements borgnes 3 ont donc une largeur réduite à leur périphérie interne pour pouvoir augmenter le nombre de logements 3 pour un même diamètre externe de l'âme 100.

Les logements 3 servent de manière précitée au montage et au logement des bandes 10 et des aimants 20 associés ceinturés par les bandes 10. Les aimants permanents 20 pourront être en ferrite. Ces aimants 20 résistent bien à la force centrifuge et sont économiques.
Les aimants 20 ont ici une forme globalement parallélépipédique. La section des aimants 20 est dans une réalisation de forme rectangulaire ou carrée. Dans ce mode de réalisation, comme visible à la figure 3, les aimants 20 présentent une partie sommitale de section trapézoïdale comprenant la face radiale externe 24. Cette partie sommitale est prolongée radialement vers l'intérieure en direction de l'âme par une partie interne de section rectangulaire ou carrée. Les logements 3 sont d'orientation radiale. Les aimants 20 comportent chacun deux faces latérales définissant un pôle Nord et un pôle Sud. Pour un même bras 4 les deux faces latérales de celui-ci sont en vis-à-vis d'un même pôle des deux aimants encadrant ledit bras. Il est formé ainsi de manière circonférentielle et alternée des bras magnétiques Nord et des bras magnétiques Sud. On obtient ainsi un nombre élevé de pôles Nord et Sud dans un encombrement axial réduit.
Le nombre d'aimants 20 et de bras dépend des applications.
De préférence le nombre des bras 4, de logements 3 et d'aimants 20 est égal au moins à 10. Les logements 3 borgnes sont délimités intérieurement par la périphérie externe de l'âme 100.
Grâce à ces dispositions on obtient une machine électrique tournante compacte axialement et puissante et ce de manière simple et économique.

Les bras 4 pourrons présenter avantageusement chacun un trou pour le passage d'organes de fixation, qui pourront être en matière magnétique ou en matière amagnétique. Les organes de fixation pourront être métalliques et pourront consister en des vis, telles que des tirants, des rivets des goujons ou des boulons. Ainsi le corps 1 aura une épaisseur constante et le paquet de tôles pourra consister en un ensemble manipulable et transportable à la faveur d'organes de fixation supplémentaires, de préférence en matière amagnétique, traversant des trous alignés supplémentaires réalisés dans le paquet de tôles.
Des flasques en matière amagnétique, telle que de l'aluminium, pourront être disposés de part et d'autre du paquet de tôles 4, 100 comme dans le document WO 02/054566 précité et être assemblés avec le paquet de tôles via les organes de fixation.

Bien entendu en variante les logements radiaux 3 pourront être dépourvus de fentes et donc fermés à leur périphérie externe.
Les logements 3 pourront donc être délimités intérieurement par la périphérie externe de l'âme centrale et extérieurement par la périphérie externe de la partie magnétique.
En référence aux figures 1, 3 et 5 on voit que les bandes 10 sont verrouillées à la faveur d'une connexion à moyens d'encliquetage 15, qui affectent la troisième portion 14 des bandes. A cet effet la troisième portion 14 des bande des comporte deux parties, l'une des parties comportant un trou tandis que l'autre partie comporte une patte inclinée destinée à pénétrer dans le trou pour verrouillage par encliquetage des parties. On notera que les moyens élastiques à action axiale 16' favorisent l'encliquetage des deux parties de la troisième portion 14. On notera que la partie à trou de la troisième portion des bandes 10 est moins large que celle comprenant la patte inclinée. La partie à trou prolonge l'une des deuxièmes portions 13 en étant repliée à 90°. Cette partie à trous est moins longue que celle comportant la patte inclinée, les moyens d'encliquetage étant implanté au voisinage de l'une des extrémités de la troisième portion 14 d'une bande. La périphérie externe des pattes des moyens d'encliquetage 15 s'étend sur une circonférence inférieure à celle des lèvres comme visible à la figure 1.
Dans cette réalisation les moyens élastiques à action radiale 16, 16'et axial d'une bande sont formés respectivement à la faveur d'une forme bombée de la première portion 11 de la bande et à la faveur d'une forme bombée d'au moins l'une des deuxièmes portions 13 de la bande.

Avantageusement les moyens élastiques à action axiale 16' sont formés à la faveur d'une forme bombée de chacune des deuxièmes portions 13 de la bande.
La mortaise 12 d'une bande affecte la forme bombée de la première portion 11 de la bande de sorte que la première portion de la bande est fendue (Voir figure 2). Cette mortaise à une taille qui est fonction de celle de son tenon associé 2 porté par l'âme.
On notera que les formes bombées sont formées à la faveur de plis (Voir figures 3 et 4).
Il ressort de la description et des figures que les formes bombées des moyens élastiques à action axiale 16' et radiale 16 prennent appui localement via leur sommet sur les faces en vis-à-vis d'un aimant ceinturé par la bande. Lors du montage des aimants 20 dans leur logement 20 on déforme les moyens élastiques à action radiale 16. Les moyens élastiques 16, 16' facilitent le verrouillage des moyens d'encliquetage 15 du fait qu'ils peuvent être déformés. Lors du montage de la bande 10 autour des aimants on comprime les moyens élastiques 16, 16' pour introduire les pattes inclinées dans leur trou associé. Ensuite on relâche la pression exercée sur les moyens élastiques pour verrouiller les pattes dans leur trou.
Après montage des aimants et des bandes, les bandes 10 sont admise à coopérer avec les lèvres 5 sous l'action des moyens élastiques à action radiale 16. Les bandes protègent ainsi les aimants 20
Les tenons 2 et les mortaises 12 bloquent en rotation les bandes 10, les moyens élastiques à action radiale 16 étant déformés pour l'engagement des mortaises 12 dans les tenons 2. Les moyens élastiques à action axiale 16' bloquent par la suite les aimants 20, qui sont ainsi retenus.
On notera que le jeu entre deux lèvres 5 dirigées l'une vers l'autre est égal -au jeu de montage près- ou supérieur à la largeur des moyens d'encliquetage 15.

### Deuxième mode de réalisation

Dans ce mode de réalisation les moyens élastiques à action radiale 16 sont conservés. Ce second mode de réalisation se distingue du premier mode de réalisation par le fait que les moyens élastiques à action axiale sont modifiés.

Ces moyens élastiques à action axiale 16' sont formés à la faveur de languettes inclinées issues d'au moins l'une des deuxièmes portions 13 d'une bande. Les languettes sont saillantes en direction des faces associées des aimants 20. L'autre deuxième portion 13 pourra être dotée également d'une languette inclinée. En variante l'autre portion pourra avoir une forme bombée comme dans le premier mode de réalisation0

Les languettes pourront être obtenues par découpe et pliage à partir des deuxièmes portions de la bande.

L'extrémité libre des languettes inclinées présente une forme bombée pour contact locale avec la face en vis-à-vis de l'aimant 20 associé.

### Troisième forme de réalisation

Dans cette forme de réalisation l'âme centrale 100 consiste en un moyeu ou manchon en matière amagnétique et les bras 4 de la partie magnétique sont rapportés sur ce moyeu. Une liaison mécanique pourra intervenir entre la périphérie interne des bras et le moyeu. La liaison mécanique pourra consister en un serrage de la périphérie interne des bras sur la périphérie externe du moyeu.

En variante la liaison mécanique pourra consister en un emmanchement à force des bras sur le moyeu, ou en une liaison à coopérations de formes.

La liaison mécanique pourra consister en une liaison à cannelures, ou en une liaison du type tenon mortaises, ou en une liaison à queue d'aronde. Dans ce mode de réalisation les tenons sont d'un seul tenant avec le moyeu ou le manchon et on rapporte les bras 4 sur le moyeu ou le manchon. Les bandes 10 pourront avoir la forme de celle du premier ou du second mode de réalisation.

Comme dans le premier mode de réalisation les bras en matière magnétique sont globalement d'orientation radiale et séparés les uns des autres par des fentes.

Les aimants permanents et les bandes 10 sont montés dans les fentes séparant deux à deux les bras 4 et délimitant avec le moyeu des logements radiaux de montage des aimants.

Une extrémité de l'âme centrale pourra être solidaire d'un flasque de transmission de mouvement comme décrit dans les documents FR 2 830 589 et FR 3 005 900 auxquels on se reportera pour plus de précisions.

Ainsi le flasque de transmission de mouvement pourra être d'un seul tenant avec le moyeu constituant l'âme centrale.

Le moyeu pourra être rapporté sur le flasque de transmission de mouvement;

Le moyeu pourra être rapporté par soudage, notamment du type laser, ou sertissage sur le flasque de transmission de mouvement.

Le flasque de transmission de mouvement, comme dans les documents précités, pourra comporter à sa périphérie externe une collerette configurée pour être fixée à l'un des composants d'un embrayage.

La collerette pourra être décalée axialement en direction opposée par rapport aux bras de la partie magnétique ;

Le flasque de transmission de mouvement pourra être prolongé vers l'intérieur par un rebord de liaison en rotation à un arbre de rotor intermédiaire ;

Le rebord de fixation pourra être troué pour sa fixation à l'aide d'organes de fixation, tels que des rivets, sur une collerette que présente l'arbre de rotor intermédiaire ;

Le rebord de fixation pourra présenter intérieurement des dents pour sa liaison à cannelures avec l'arbre de rotor intermédiaire.

Ainsi qu'il ressort de ce qui précède le corps 1 se monte en lieu et place de celui des documents FR 2 830 589 et FR 3 005 900. En considérant les figures de ces documents pour le même diamètre intérieur et extérieur du paquet de tôles on voit que l'on réduit l'encombrement axial du corps du rotor ainsi que l'encombrement axial du corps du stator et donc la masse du bobinage porté par le corps du stator ce qui permet de réduire le coût de la machine électrique tournante. Pour un même diamètre extérieur du paquet de tôles on peut réduire le diamètre intérieur de celui-ci.

Dans tous les cas on peut augmenter le diamètre du dispositif de débrayage et le diamètre du palier ce qui permet d'augmenter la durée de vie de la machine électrique tournante.

En variante le moyeu en matière amagnétique pourra être relié à un arbre de rotor par exemple par emmanchement à force de portions moletés de l'arbre dans l'alésage interne du moyeu. On pourra prévoir des organes de fixation, comme dans le premier mode de réalisation, traversant les bras 4 et assemblées avec un flasque solidaire du moyeu, le montage des bras sur le moyeu étant réalisé de manière décrite ci-dessus.

### Autres formes de réalisations

Dans les figures le rayon de la périphérie externe des bras 4 n'est pas constant pour diminution des bruits magnétiques et des vibrations. En variante le rayon de la périphérie externe des bras 4 est constant ainsi que l'entrefer entre le stator et le rotor de la machine électrique tournante.

Dans les figures les prolongements 5 en forme de lèvres constituent des épaulements pour les bandes de retenue 10 des aimants 20 et délimitent la largeur réduite des fentes étagées en largeur circonférentielle du fait de la présence d'un jeu entre les lèvres 5 de deux bras consécutifs. On notera que la largeur de ce jeu (voir figure 1) est supérieure ou égal à celui des moyens d'encliquetage 15. En variante les lèvres 5 se rejoignent de sorte que les logements 3 pourront être fermés à leur périphérie externe. Dans ce cas il faut évider centralement les lèvres 5 pour le passage des moyens d'encliquetage 15.
En variantes les logements pourront être de largeur constante.
En variante les aimants appartiennent à un ensemble magnétique comportant un aimant et au moins une partie en matière amagnétique fixée, par exemple par collage, sur la périphérie interne de l'aimant ainsi de hauteur radiale réduite. Dans ce cas les moyens élastiques à action radiale agissent vi les bandes sur la portion amagnétique.

En variante les aimants 20 appartiennent à un ensemble magnétique comportant deux aimants réunis par collage. Ces aimants pourront ne pas être de même nature, l'un étant par exemple en ferrite et l'autre en terre rare. Bien entendu toutes les combinaisons sont possibles. Ainsi l'ensemble magnétique pourra comporter au moins un aimant en ferrite, un autre aimant et au moins une partie en matière amagnétique.
Dans une autre forme de réalisation plus coûteuse les aimants sont en terre rare, par exemple en Néodyme-Fer-Bore.
Grâce aux ensembles magnétiques on peut standardiser les aimants et en fonction des applications et de la taille des logements 3.

Dans un mode de réalisation on peut fixer, par exemple par collage, une cible magnétique, avantageusement dotée de pôles Nord et Sud, pour suivre la rotation du rotor de la machine électrique tournante, dont le carter est doté d'un porte capteur par exemple à effet Hall associé à la cible magnétique comme décrit dans le document FR 2 745 44 auquel on se reportera

### Applications

La machine électrique tournante à corps 1 de rotor pourra être équipée d'un pont redresseur de courant alternatif en courant continu visible partiellement dans le document WO 02 / 054566. Elle consistera alors en un alternateur par exemple de véhicule automobile.

La machine électrique tournante à corps de rotor 1 pourra être dotée d'un onduleur comme décrit par exemple dans le document FR 2 745 444.
Dans ce cas elle pourra consister en un alterno-démarreur comme dans les documents FR 2 830 589.
En variante on peut modifier l' alterno-démarreur de ce document FR 2 830 589 pour que le flasque portant le palier appartienne à un carter intercalé axialement entre le bloc moteur et la cloche de la boîte de vitesse de sorte que la machine électrique tournante appartienne à un module hybride comprenant la machine électrique tournante avec un corps de rotor selon l'invention, le dispositif de débrayage et un amortisseur de torsion solidaire du premier flasque 13 comme décrit dans le document FR 3 005 589. En variante le moyeu 12 pourra être solidaire de l'arbre d'entrée de la boîte de vitesse.

Bien entendu la présence du premier embrayage associé au vilebrequin du véhicule n'est pas obligatoire, l'arbre intermédiaire étant alors une prolongation du nez du vilebrequin du véhicule. Dans ce document le carter portant le stator pourra être refroidit par une circulation de fluide, tel que le fluide de refroidissement du véhicule.

Cet alterno-démarreur pourra appartenir à un prolongateur d'autonomie d'un véhicule électrique, le dit prolongateur comportant un moteur thermique associé à l'alterno-démarreur pour former un groupe électrogène afin de recharger les batteries du véhicule électrique.

L' alterno-démarreur pourra être entraîné en rotation par le moteur thermique du véhicule automobile via un dispositif de transmission à au moins une courroie et donc tourner plus vite ce qui est rendu possible grâce aux bandes 10.

Bien entendu avec un onduleur la machine électrique tournante à corps de rotor 1 pourra être un moteur électrique, tel qu'un moteur électrique d'un compresseur de climatisation par exemple du type « scroll » décrit dans le document EP 1 865 200.

Il ressort de ce qui précède que la machine électrique tournante, telle qu'un alternateur, un alterno-démarreur ou un moteur électrique de véhicule automobile, est avantageusement du type polyphasé, par exemple du type triphasé, pentaphasé ou hexaphasé.

Le stator de la machine électrique tournante pourra comporter, de manière connue, un corps de stator doté de dents notamment pour montage de bobines concentriques. Ce corps de stator pourra comporter un nombre de dents supérieur au nombre d'aimants, par exemple 72 dents pour 24 bras 4. La longueur axiale du corps du stator pourra être inférieure à la longueur axiale des bras 4. Avantageusement le nombre de bras 4 est égal au moins à 10.
En variante le corps du stator pourra porter un bobinage du type ondulé formé à partir de fils conducteurs continus ou en forme de segments conducteurs comme décrit par exemple dans le document EP 0 881 742.

La présente invention permet de réduire le volume des aimants de l'ordre de 35 à 40% ainsi que les fuites de flux magnétique du fait notamment que le moyeu est en matière amagnétique. Cela permet également de réduire les coûts, le poids du rotor et d'augmenter le diamètre interne. On pourra ne pas utiliser des aimants en terre rare, de simples aimants en ferrite étant suffisants. Le rotor à bras rapportés résiste bien à l'action de la force centrifuge.

De manière précitée on appréciera que les bras segmentés 4 en combinaison avec le moyeu mauvais conducteur de flux magnétique permettent de réduire les fuites magnétiques et donc la masse du rotor. La masse de fer due à la présence des bras 4 est également réduite ce qui permet de diminuer le prix de la machine électrique.

## Revendications

1. Corps de rotor (1) comportant :
- une partie magnétique (4), telle qu'un paquet de tôles ;
- des logements radiaux (3) ménagés dans la partie magnétique (4);
- des aimants permanents (20) montés dans les logements radiaux (3) et comportant chacun deux faces d'extrémité axiale (23) et deux faces d'extrémité radiale (21,24);
- une âme centrale (100) de support de la partie magnétique ; **caractérisé en ce qu'**il comporte
- des tenons (2) ménagés dans l'âme (100) à la périphérie interne des logements (3) ;
- des bandes de matière (10) ceinturant les faces d'extrémité axiales (13) et radiales (21, 24) des aimants (20) ;
- chaque bande (10) comportant, d'une part une première portion radiale interne (11) dotée d'une mortaise (12) coopérant par coopération de formes avec le tenon (2) associé de l'âme (100), d'une deuxième part, deux deuxièmes portions d'extrémité axiale (13) et d'une troisième part, une troisième portion radiale externe(14) ;
- des moyens élastiques à action radiale (16) appartenant à la première portion (11) des bandes et prenant appui sur l'âme centrale (100) pour solliciter la troisième portion (14) des bandes et les aimants (20) ceinturés par les bandes (10) en direction de la périphérie externe des logements (3) ;
- et des moyens élastiques à action axiale (16') appartenant aux deux deuxièmes portions axiales (13) des bandes pour action sur les faces d'extrémités axiale (23) des aimants.

2. Corps du rotor (1) selon la revendication 1, dans lequel les bandes (10) sont verrouillées à la faveur d'une connexion (15) à moyens d'encliquetage.

3. Corps du rotor (1) selon la revendication 2, dans lequel les moyens d'encliquetage (15) affectent la troisième portion des bandes.

4. Corps du rotor (1) selon la revendication 3, dans lequel la troisième portion (14) des bandes comporte deux parties, l'une des parties comportant un trou tandis que l'autre partie comporte une patte inclinée destinée à pénétrer dans le trou.

5. Corps selon la revendication 4, dans lequel la partie à trou de la troisième portion (14) des bandes (10) est moins large que celle comprenant la patte inclinée.

6. Corps du rotor (1) selon l'une quelconque des revendications précédentes, dans lequel les moyens élastiques à action radiale (16) et axiale (16') d'une bande sont formés respectivement à la faveur d'une forme bombée de la première portion (11) de la bande et à la faveur d'une forme bombée d'au moins l'une des deuxièmes portions (13) de la bande.

7. Corps du rotor (1) selon la revendication 6, dans lequel les moyens élastiques à action axiale (16') sont formés à la faveur d'une forme bombée de chacune des deuxièmes portions (13) de la bande.

8. Corps du rotor (1) selon la revendication 6 ou 7, dans lequel la mortaise (12) d'une bande affecte la forme bombée de la première portion de la bande de sorte que la première portion de la bande est fendue.

9. Corps du rotor (1) selon l'une des revendications 6 à 8, dans lequel les formes bombées des moyens élastiques à action axiale (16') et radiale (16) prennent appui localement via leur sommet sur les faces en vis-à-vis d'un aimant (20) ceinturé par la bande.

10. Corps du rotor (1) selon l'une des revendications 1 à 6, dans lequel les moyens élastiques à action axiale (16') sont formés à la faveur de languettes inclinées issues d'au moins l'une des deuxièmes portions d'une bande.

11. Corps du rotor (1) selon l'une quelconque des revendications précédentes, dans lequel la partie magnétique (4) comporte des bras (4) en matière magnétique globalement d'orientation radiale.

12. Corps du rotor (1) selon la revendication 11, dans lequel chaque bras (4) présente à sa périphérie externe des prolongements circonférentiels (5), tels que des lèvres, s'étendant de part et d'autre du bras.

13. Corps de rotor (1) selon la revendication 11 ou 12, dans lequel l'âme (100) appartient à la partie magnétique.

14. Corps du rotor (1) selon la revendication 11 ou 12, dans lequel les bras (4) sont rapportés sur l'âme centrale en matériau amagnétique.

15. Corps de rotor selon la revendication 13, dans lequel l'âme centrale (100) consiste un moyeu en matière amagnétique solidaire d'un flasque de transmission de mouvement.

16. Corps de rotor (1) selon l'une quelconque des revendications précédentes, dans lequel les aimants (20) sont des aimants sont en ferrite.

17. Corps de rotor (1) selon l'une quelconque des revendications précédentes, dans lequel les bandes (10) sont en matériau amagnétique, tel que de l'inox.

18. Machine électrique tournante, notamment un alternateur, un alterno-démarreur ou un moteur électrique de véhicule automobile, comportant un corps de rotor (1) selon l'une quelconque des revendications précédentes.

## Patentansprüche

1. Rotorkörper (1), welcher umfasst:
- einen magnetischen Teil (4), wie etwa ein Blechpaket;
- radiale Aufnahmen (3), die in dem magnetischen Teil (4) ausgebildet sind;
- Dauermagnete (20), die in den radialen Aufnahmen (3) angebracht sind und jeweils zwei axiale Endflächen (23) und zwei radiale Endflächen (21, 24) aufweisen;
- einen zentralen Kern (100) zur Abstützung des magnetischen Teils;
**dadurch gekennzeichnet, dass** er umfasst:
- Zapfen (2), die im Kern (100) am Innenumfang der Aufnahmen (3) ausgebildet sind;
- Materialstreifen (10), welche die axialen (13) und radialen Endflächen (21, 24) der Magnete (20) umgürten;
- wobei jeder Streifen (10) erstens einen radial inneren ersten Abschnitt (11), der mit einem Schlitz (12) versehen ist, der mit dem mit dem Kern (100) verbundenen Zapfen (2) formschlüssig zusammenwirkt, zweitens zwei zweite Abschnitte (13) an den axialen Enden und drittens einen radial äußeren dritten Abschnitt (14) aufweist;
- radial wirkende elastische Mittel (16), die zum ersten Abschnitt (11) der Streifen gehören und sich am zentralen Kern (100) abstützen, um den dritten Abschnitt (14) der Streifen und die von den Streifen (10) umgürteten Magnete (20) in Richtung des Außenumfangs der Aufnahmen (3) zu beaufschlagen;
- und axial wirkende elastische Mittel (16'), die zu den zwei axialen zweiten Abschnitten (13) der Streifen gehören, zur Einwirkung auf die axialen Endflächen (23) der Magnete.

2. Rotorkörper (1) nach Anspruch 1, wobei die Streifen (10) mittels einer Verbindung (15) durch Rastmittel verriegelt sind.

3. Rotorkörper (1) nach Anspruch 2, wobei die Rastmittel (15) am dritten Abschnitt der Streifen ausgebildet sind.

4. Rotorkörper (1) nach Anspruch 3, wobei der dritte Abschnitt (14) der Streifen zwei Teile aufweist, wobei einer der Teile ein Loch aufweist, während der andere Teil eine sich verjüngende Lasche aufweist, die dazu bestimmt ist, in das Loch einzudringen.

5. Körper nach Anspruch 4, wobei der mit einem Loch versehene Teil des dritten Abschnitts (14) der Streifen (10) weniger breit als derjenige ist, der die sich verjüngende Lasche umfasst.

6. Rotorkörper (1) nach einem der vorhergehenden Ansprüche, wobei die radial (16) und axial (16') wirkenden elastischen Mittel eines Streifens jeweils aufgrund einer gewölbten Form des ersten Abschnitts (11) des Streifens und aufgrund einer gewölbten Form wenigstens eines der zweiten Abschnitte (13) des Streifens ausgebildet sind.

7. Rotorkörper (1) nach Anspruch 6, wobei die axial wirkenden elastischen Mittel (16') aufgrund einer gewölbten Form jedes der zweiten Abschnitte (13) des Streifens ausgebildet sind.

8. Rotorkörper (1) nach Anspruch 6 oder 7, wobei der Schlitz (12) eines Streifens auf die gewölbte Form des ersten Abschnitts des Streifens einwirkt, so dass der erste Abschnitt des Streifens geschlitzt ist.

9. Rotorkörper (1) nach einem der Ansprüche 6 bis 8, wobei die gewölbten Formen der axial (16') und radial (16) wirkenden elastischen Mittel über ihren Scheitel lokal an den gegenüberliegenden Flächen eines von dem Streifen umgürteten Magneten (20) anliegen.

10. Rotorkörper (1) nach einem der Ansprüche 1 bis 6, wobei die axial wirkenden elastischen Mittel (16') mittels sich verjüngender Zungen ausgebildet sind, die von wenigstens einem der zweiten Abschnitte eines Streifens ausgehen.

11. Rotorkörper (1) nach einem der vorhergehenden Ansprüche, wobei der magnetische Teil (4) Arme (4) aus magnetischem Material mit einer im Wesentlichen radialen Ausrichtung aufweist.

12. Rotorkörper (1) nach Anspruch 11, wobei jeder Arm (4) an seinem Außenumfang in Umfangsrichtung verlaufende Verlängerungen (5), wie etwa Lippen, aufweist, die sich beiderseits des Armes erstrecken.

13. Rotorkörper (1) nach Anspruch 11 oder 12, wobei der Kern (100) zu dem magnetischen Teil gehört.

14. Rotorkörper (1) nach Anspruch 11 oder 12, wobei die Arme (4) an den zentralen Kern aus nichtmagnetischem Material angesetzt sind.

15. Rotorkörper nach Anspruch 13, wobei der zentrale Kern (100) aus einer Nabe aus nichtmagnetischem Material besteht, die fest mit einem Flansch zur Bewegungsübertragung verbunden ist.

16. Rotorkörper (1) nach einem der vorhergehenden Ansprüche, wobei die Magnete (20) Magnete sind aus Ferrit sind.

17. Rotorkörper (1) nach einem der vorhergehenden Ansprüche, wobei die Streifen (10) aus nichtmagnetischem Material wie etwa nichtrostendem Stahl hergestellt sind.

18. Rotierende elektrische Maschine, insbesondere Wechselstromlichtmaschine, Startergenerator oder Elektromotor eines Kraftfahrzeugs, welche einen Rotorkörper (1) nach einem der vorhergehenden Ansprüche aufweist.

## Claims

1. Rotor body (1) including:
- a magnetic part (4), such as a stack of laminations;
- radial recesses (3) formed in the magnetic part (4) ;
- permanent magnets (20) mounted in the radial recesses (3) and each including two axial end faces (23) and two radial end faces (21, 24);
- a central core (100) for supporting the magnetic part;
**characterized in that** it includes
- tenons (2) formed in the core (100) at the inner periphery of the recesses (3);
- strips of material (10) surrounding the axial (13) and radial (21, 24) end faces of the magnets (20);
- each strip (10) including firstly a first inner radial potion (11) provided with a mortise (12) interacting in a form-fitting manner with the tenon (2) associated with the core (100), secondly, two second axial end portions (13) and, thirdly, a third outer radial portion (14);
- flexible radial action means (16) belonging to the first portion (11) of the strips and bearing on the central core (100) so as to urge the third portion (14) of the strips and the magnets (20) surrounded by the strips (10) in the direction of the outer periphery of the recesses (3);
- and flexible axial action means (16') belonging to the two second axial portions (13) of the strips for acting on the axial end faces (23) of the magnets.

2. Rotor body (1) according to Claim 1, wherein the strips (10) are locked by a connection (15) with snap-in means.

3. Rotor body (1) according to Claim 2, wherein the snap-in means (15) concern the third portion of the strips.

4. Rotor body (1) according to Claim 3, wherein the third portion (14) of the strips includes two parts, one of the parts including a hole while the other part includes an inclined lug intended to penetrate the hole.

5. Body according to Claim 4, wherein the part, with a hole, of the third portion (14) of the strips (10) is not as wide as the one comprising the inclined lug.

6. Rotor body (1) according to any one of the preceding claims, wherein the flexible radial (16) and axial (16') action means of a strip are formed by a curved form of the first portion (11) of the strip and by a curved form of at least one of the second portions (13) of the strip, respectively.

7. Rotor body (1) according to Claim 6, wherein the flexible axial action means (16') are formed by a curved form of each of the second portions (13) of the strip.

8. Rotor body (1) according to Claim 6 or 7, wherein the mortise (12) of a strip concerns the curved form of the first portion of the strip, such that the first portion of the strip is split.

9. Rotor body (1) according to one of Claims 6 to 8, wherein the curved forms of the flexible axial (16') and radial (16) action means bear locally, via their top, on the opposite faces of a magnet (20) surrounded by the strip.

10. Rotor body (1) according to one of Claims 1 to 6, wherein the flexible axial action means (16') are formed by inclined tabs originating from at least one of the second portions of a strip.

11. Rotor body (1) according to any one of the preceding claims, wherein the magnetic part (4) includes arms (4) made of magnetic material with a radial overall orientation.

12. Rotor body (1) according to Claim 11, wherein each arm (4) has, at its outer periphery, circumferential extensions (5), such as lips, extending on either side of the arm.

13. Rotor body (1) according to Claim 11 or 12, wherein the core (100) belongs to the magnetic part.

14. Rotor body (1) according to Claim 11 or 12, wherein the arms (4) are added to the central core made of non-magnetic material.

15. Rotor body according to Claim 13, wherein the central core (100) consists of a hub made of non-magnetic material joined to a motion transmission flange.

16. Rotor body (1) according to any one of the preceding claims, wherein the magnets (20) are magnets are made of ferrite.

17. Rotor body (1) according to any one of the preceding claims, wherein the strips (10) are made of non-magnetic material, such as stainless steel.

18. Rotating electrical machine, in particular an alternator, a starter-alternator or an electric motor for a motor vehicle, comprising a rotor body (1) according to any one of the preceding claims.
